# FASCICULE DE BREVET EUROPEEN

(11) **EP 2 152 514 B1**
(45) Date de publication et mention de la délivrance du brevet: **06.04.2011**
(21) Numéro de dépôt: 08788188.4
(22) Date de dépôt: 16.04.2008
(51) Int. Cl.: B32B 27/10, B60J 10/02, B32B 17/10

(54) **ELEMENT DE VITRAGE, NOTAMMENT POUR VEHICULES AUTOMOBILES**
VERGLASUNGSELEMENT, INSBESONDERE FÜR MOTORFAHRZEUGE
GLAZING ELEMENT, NOTABLY FOR MOTOR VEHICLES.

(30) Priorité: 08.06.2007 FR 0755602
(43) Date de publication de la demande: 17.02.2010
(73) Titulaire: Peugeot Citroën Automobiles SA, 78140 Vélizy-Villacoublay (FR)
(72) Inventeur: DAVID, Jérôme, F-92360 Meudon La Foret (FR)
(86) Numéro de dépôt international: PCT/FR2008/050674
(87) Numéro de publication internationale: WO 2008/152254

(56) Documents cités:
- DE-A1-102005 025 163
- DE-B3-102005 024 857
- US-A- 4 857 376
- US-A1- 2006 232 093

## Description

La présente invention concerne un élément de vitrage, notamment un élément de vitrage destiné à être collé directement sur la carrosserie d'un véhicule automobile.

Les éléments de vitrage destinés aux véhicules automobiles comprennent une plaque de verre minéral ou organique, revêtue sur une de ses faces d'un film protecteur, de préférence, un film plastique anti-éclats et résistant à la déchirure et aux rayures.

Ce film protecteur est fixé sur la plaque de verre au moyen d'un film adhésif.

L'assemblage des différentes couches composant l'élément de vitrage est réalisé lors d'une cuisson par exemple dans un autoclave à haute température et à forte pression.

Le bord du film adhésif est généralement disposé en retrait par rapport au bord du film protecteur car l'adhésif flue lors de la cuisson dans l'autoclave. Ce débordement doit être évité car il nécessite un nettoyage minutieux et peut entraîner une gêne lors de l'opération de collage de l'élément de vitrage sur la carrosserie du véhicule automobile.

En effet, lors de l'assemblage du film protecteur, le film adhésif rendu plus fluide par la température, a tendance à fluer sous la pression et à occuper une plus grande surface qu'initialement en s'étalant vers le bord de la plaque de verre.

Ainsi, il est difficile pour les fabricants de ce type d'éléments de vitrage de trouver des bonnes dimensions pour le film adhésif et ils préfèrent généralement réaliser un film adhésif plus court.

Le comportement du bord libre du film adhésif et du film protecteur peuvent être gérés de différentes manières.

A cet effet, dans le document WO 2004/073976, plusieurs solutions sont proposées.

Une première solution consiste à retenir l'extrémité du film protecteur par un élément intermédiaire disposé entre l'élément de vitrage et la structure métallique sur laquelle ladite plaque est fixée. Cet élément intermédiaire est formé par un cadre ou une pièce métallique ou en plastique.

Cette solution a pour inconvénient de rendre la conception de l'élément de vitrage plus complexe et plus coûteuse et d'alourdir le véhicule.

De plus, les éléments rapportés peuvent constituer des obstacles au bon défilement de la buse utilisée sur les machines d'encollage, lors de son défilement sur la bordure devant recevoir la colle. Il peut se produire une irrégularité du cordon de colle ainsi déposé générant une mauvaise tenue mécanique et/ou une mauvaise étanchéité.

Une autre solution consiste à effectuer un collage sans élément de retenu, ce qui implique l'utilisation d'une colle très fluide, car toutes ces solutions reposent sur le principe de perçage de la bordure du film protecteur et/ou d'éléments rapportés au film protecteur entièrement entourés par la colle.

Or, la colle utilisée dans l'industrie automobile est très visqueuse et ne se répand pas correctement au-dessous de la bordure du film protecteur. Cette solution ne fonctionne pas avec une colle visqueuse car la tenue mécanique est insuffisante ce qui peut produire un arrachement de la bordure du film protecteur sensée être englobée dans la colle lors d'un choc ou d'une sollicitation mécanique importante.

L'invention a pour but de proposer un élément de vitrage qui évite ces différents inconvénients et qui est simple à mettre en oeuvre.

L'invention a donc pour objet un élément de vitrage, notamment pour véhicules automobiles, du type comprenant une plaque de verre revêtue sur une des ses faces par un film protecteur fixé sur ladite face par un film adhésif dont le bord est en retrait par rapport au bord du film protecteur, caractérisé en ce que le bord du film protecteur comporte une succession de découpes pour maintenir ledit film protecteur dans un cordon de colle.

Selon d'autres caractéristiques de l'invention :
- les découpes sont ménagées sur une zone du bord du film protecteur située en dehors du film adhésif,
- les découpes forment une succession de créneaux,
- les créneaux ont une forme rectangulaire,
- les créneaux ont une forme courbe du type sinusoïdal,
- les parties pleines des créneaux comportent un trou,
- la distance séparant chaque trou du bord du film protecteur est supérieure à 2 mm,
- la distance séparant deux trous contigus est supérieure à 3 mm,
- chaque trou est rectangulaire, et
- la longueur de chaque trou rectangulaire est supérieure à 5 mm et la largeur de chaque trou rectangulaire est supérieure à 3 mm.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective éclatée d'un élément de vitrage, conforme à l'invention,
- la Fig. 2 est une vue partielle en coupe verticale d'un bord d'un élément de vitrage, conforme à l'invention,
- la Fig. 3 est une vue partielle de dessus d'un premier mode de réalisation d'un bord de l'élément de vitrage, et
- la Fig. 4 est une vue partielle et de dessus d'un second mode de réalisation d'un bord de l'élément de vitrage.

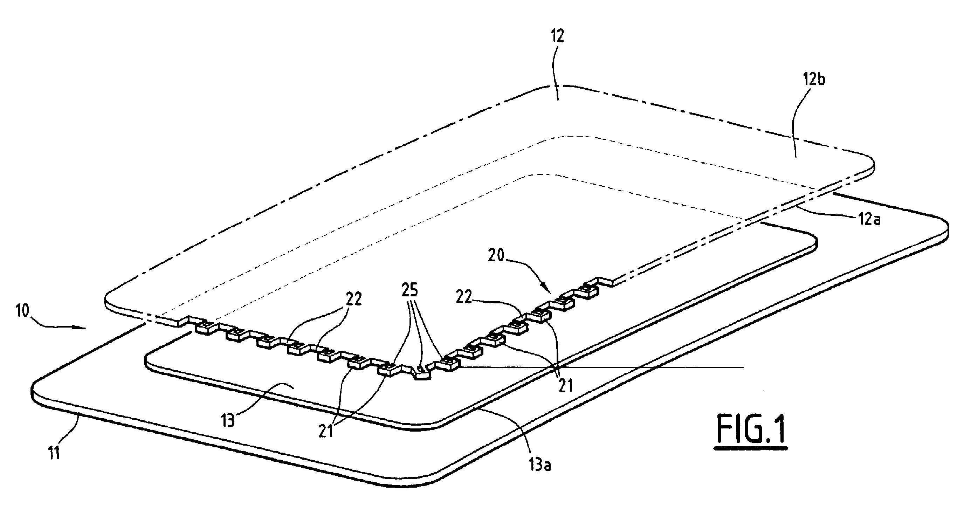

Sur la Fig. 1, on a représenté un élément de vitrage, conforme à l'invention et désigné dans son ensemble par la référence 10. Les épaisseurs des différents composants de l'élément de vitrage 10 ont été volontairement exagérées dans le but de faciliter la compréhension des dessins.

L'élément de vitrage 10 se compose d'une plaque de verre 11, comme par exemple une plaque de verre minéral ou organique, revêtue sur l'une de ses faces par un film protecteur 12 de préférence un film plastique anti-rayures ou anti-éclats.

Ce film plastique est par exemple un film de polyéthylènetéréphthalate optique, également appelé film PET, revêtu de polysiloxanes ou de laques d'acrylate ou un film de polycarbonate, également appelé film PC.

Le film protecteur 12 est fixé sur la face correspondante de la plaque de verre 11 par un film adhésif 13. Ce film adhésif 13 est de préférence un film de polyvinybutyral, également appelé film PVB, et il peut également être un film transparent à base de polyuréthanne thermoplastique (PTU) ou un film à base copolymère éthylène- acétate de vinyle (EVA).

L'assemblage de la plaque de verre 11 et du film protecteur 12 par le film adhésif 13 est réalisé lors d'une cuisson dans un autoclave, non représenté, à haute température et à forte pression.

Une fois les différents composants de l'élément de vitrage 10 ainsi assemblés, cet élément de vitrage 10 est fixé directement sur la carrosserie du véhicule automobile par exemple par collage.

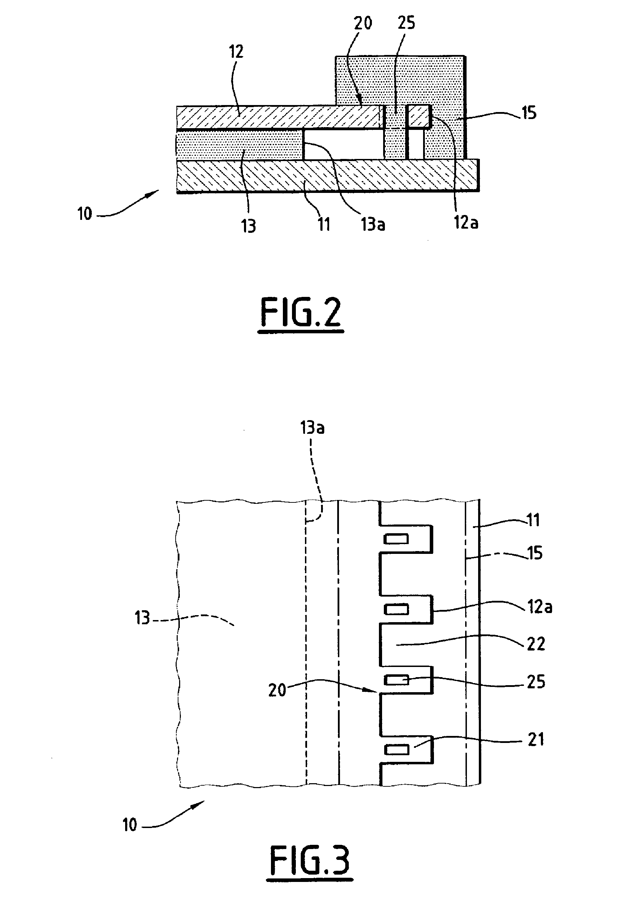

Ainsi que montré sur les Figs. 1 et 2, le bord 13a du film adhésif 13 est en retrait par rapport au bord 12a du film protecteur 12, car l'adhésif du film 13 flue lors de la cuisson dans l'autoclave. Le bord 12a du film protecteur 12 est alors maintenu par un cordon de colle 15.

Dans le but d'améliorer l'interface entre la plaque de verre 11 et le cordon de colle 15 déposé sur la périphérie de cette plaque de verre 11 et également dans le but d'assurer une emprise du film protecteur 12 dans ce cordon de colle 15, le bord 12a du film protecteur 12 comporte une succession de découpes 20 pour maintenir ledit film protecteur 12 dans ledit cordon de colle 15.

Les découpes 20 sont ménagées sur une zone de la bordure 12b du film protecteur 12 située en dehors du film adhésif 13 et ces découpes 20 s'étendent, de préférence, sur toute la périphérie du film protecteur 12.

Ainsi que montré à la Fig. 1, les découpes 20 forment une succession de créneaux déterminant des parties pleines 21 et des parties vides 22.

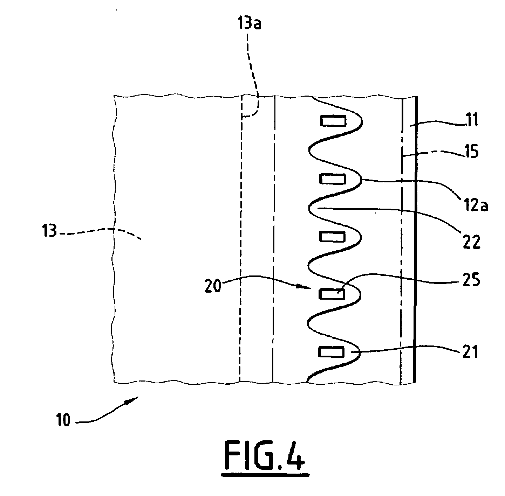

Selon un premier mode de réalisation représenté à la Fig. 3, les parties pleines 21 et les parties vides 22 déterminant les créneaux ont une forme rectangulaire et selon un second mode de réalisation représenté à la Fig. 4, les parties pleines 21 et les parties vides 22 ont une forme courbe du type sinusoïdal.

Les parties pleines 21 des créneaux comportent, de préférence, un trou 25 par exemple de forme rectangulaire ou de tout autre forme appropriée.

La distance séparant chaque trou 25 du bord 12a du film protecteur 12 est au minimum de 2 mm. La distance maximum possible dépend de la largeur du cordon de colle. En effet la colle doit pouvoir recouvrir le bord de la plaque de verre 11, le bord 12a du film protecteur 12, le trou 25 et une partie du film protecteur 12 situé au-delà du trou 25, vers le centre de l'élément de vitrage 10. La distance séparant deux trous 25 contigus est au minimum de 3 mm.

Enfin, la longueur de chaque trou 25 rectangulaire est au minimum de 5 mm, selon un mode réalisation préférentiel elle peut être de 8 mm, et la largeur de chaque trou 25 rectangulaire est au minimum de 3 mm. Les dimensions du trou 25 sont ainsi adaptées selon la viscosité de la colle. De plus la longueur maximale possible dépend de la largeur du cordon de colle, la totalité du cordon de colle doit recouvrir le trou 25.

La présence des trous 25 dans les parties pleines 21 des découpes 20 favorise la tenue mécanique du film protecteur 12 dans le cordon de colle 15 par un effet de "pont". La colle flue alors dans les trous 25 et adhère localement sur le verre à la verticale des trous 25 comme le montre la figure 2.

D'une manière générale, la forme des trous 25 la plus adaptée au collage d'une plaque de verre 11 équipée d'un film protecteur 12 par exemple d'un film anti-éclats doit être située au plus près du bord 12a de ce film protecteur 12, tout en optimisant la surface de contact de la plaque de verre 11 et du cordon de colle 15 sans remettre en cause la bonne tenue du film protecteur 12.

La forme courbe du type sinusoïdal des parties pleines 21 et 22 des créneaux permet de limiter les phénomènes d'accrochage d'une buse d'encollage ou des tampons textiles utilisés pour le nettoyage et réactivation du primaire de la zone encollée. Cette disposition a aussi pour effet de limiter la concentration de contraintes dans les angles du film protecteur 12 lors de sollicitations mécaniques violentes, par exemple dans le cas d'un arrachement ou d'un choc. Le film protecteur 12 est donc moins susceptible de se déchirer dans ces situations.

L'élément de vitrage selon l'invention permet le collage de cet élément de vitrage directement sur la carrosserie du véhicule en utilisant une colle visqueuse, tout en assurant une tenue mécanique du film protecteur et de l'ensemble dont il est solidaire sur ladite carrosserie en cas de choc ou de tentative d'effraction.

L'élément de vitrage selon l'invention présente également l'avantage de pouvoir s'affranchir d'un élément de retenue complémentaire du film protecteur ce qui permet d'alléger la masse de cet élément de vitrage.

## Revendications

1. Elément de vitrage (10), notamment pour véhicules automobiles, du type comprenant une plaque de verre (11) revêtue sur une de ses faces par un film protecteur (12) fixé sur ladite face par un film adhésif (13) dont le bord (13a) est en retrait par rapport au bord (12a) du film protecteur (12), **caractérisé en ce que** le bord (12a) du film protecteur (12) comporte une succession de découpes (20) pour maintenir ledit film protecteur (12) dans un cordon de colle (15).

2. Elément de vitrage (10) selon la revendication 1, **caractérisé en ce que** les découpes (20) sont ménagées dans une zone du bord (12a) du film protecteur (12) située en dehors du film adhésif (13).

3. Elément de vitrage (10) selon la revendication 1 ou 2, **caractérisé en ce que** les découpes (20) forment une succession de créneaux.

4. Elément de vitrage (10) selon la revendication 3, **caractérisé en ce que** les créneaux déterminant les découpes (20) ont une forme rectangulaire.

5. Elément de vitrage (10) selon la revendication 3, **caractérisé en ce que** les créneaux déterminant les découpes (20) ont une forme courbe du type sinusoïdal.

6. Elément de vitrage (10) selon l'une quelconque des revendications 3 à 5, **caractérisé en ce que** les parties pleines (21) des créneaux comportent un trou (25).

7. Elément de vitrage (10) selon la revendication 6, **caractérisé en ce que** la distance séparant chaque trou (25) du bord (12a) du film protecteur (12) est supérieure à 2 mm.

8. Elément de vitrage (10) selon la revendication 6 ou 7, **caractérisé en ce que** la distance séparant deux trous (25) contigus est supérieure à 3 mm.

9. Elément de vitrage selon l'une quelconque des revendications 6 à 8, **caractérisé en ce que** chaque trou (25) est rectangulaire.

10. Elément de vitrage selon la revendication 9, **caractérisé en ce que** la longueur de chaque trou (25) rectangulaire est supérieure à 5 mm et la largeur de chaque trou (25) rectangulaire est supérieure à 3 mm.

## Claims

1. Glazing element (10), especially for motor vehicles, comprising a glass plate (11), coated on one side with a protective film (12) attached to said side with an adhesive film (13), whose edge (13a) is set back from the edge (12a) of the protective film (12), **characterized in that** the edge (12a) of the protective film (12) comprises a series of cuts (20) for holding said protective film (12) in a bead of adhesive (15).

2. Glazing element (10) according to claim 1, **characterized in that** the cuts (20) are formed in a boundary area of the edge (12a) of the protective film (12) located outside of the adhesive film (13).

3. Glazing element (10) according to claim 1 or 2, **characterized in that** the cuts (20) form a series of slots.

4. Glazing element (10) according to claim 3, **characterized in that** the slots defining the cuts (20) have a rectangular shape.

5. Glazing element (10) according to claim 3, **characterized in that** the slots defining the cuts (20) have a curved shape of the sinusoidal type.

6. Glazing element (10) according to any of claims 3 - 5, **characterized in that** the solid parts (21) of the slots have a hole (25).

7. Glazing element (10) according to claim 6, **characterized in that** the distance between each hole (25) and the edge (12a) of the protective film (12) is greater than 2 mm.

8. Glazing element (10) according to claim 6 or 7, **characterized in that** the distance between two contiguous holes (25) is greater than 3 mm.

9. Glazing element according to any of claims 6 - 8, **characterized in that** each hole (25) is rectangular.

10. Glazing element according to claim 9, **characterized in that** the length of each rectangular hole (25) is greater than 5 mm and the width of each rectangular hole (25) is greater than 3 mm.

## Patentansprüche

1. Verglasungselement (10), insbesondere für Kraftfahrzeuge der Art, die über eine Glasplatte (11) verfügt, die auf einer ihrer Seiten mit einem Schutzfilm (12) beschichtet ist, der auf der genannten Seite mit einem Klebefilm (13) befestigt ist, dessen Rand (13a) im Verhältnis zum Rand (12a) des Schutzfilms (12) zurücksteht, **dadurch gekennzeichnet, dass** der Rand (12a) des Schutzfilms (12) eine Abfolge von Ausschnitten (20) aufweist, um den genannten Schutzfilm (12) in einer Klebstoffraupe (15) zu halten.

2. Verglasungselement (10) gemäß Anspruch 1, **dadurch gekennzeichnet, dass** die Ausschnitte (20) innerhalb eines Randbereichs (12a) des Schutzfilms (12) ausgeführt sind, der sich außerhalb des Klebefilms (13) befindet.

3. Verglasungselement (10) gemäß Anspruch 1 oder 2, **dadurch gekennzeichnet, dass** die Ausschnitte (20) eine Abfolge zinnenartiger Aussparungen bilden.

4. Verglasungselement (10) gemäß Anspruch 3, **dadurch gekennzeichnet, dass** die zinnenartigen Aussparungen, welche die Ausschnitte (20) festlegen, eine rechteckige Form aufweisen.

5. Verglasungselement (10) gemäß Anspruch 3 , **dadurch gekennzeichnet, dass** die zinnenartigen Aussparungen, welche die Ausschnitte (20) festlegen, die Form einer Sinuskurve haben.

6. Verglasungselement (10) gemäß einem der Ansprüche 3 bis 5, **dadurch gekennzeichnet, dass** die gefüllten Teile (21) der zinnenartigen Aussparungen ein Loch (25) aufweisen.

7. Verglasungselement (10) gemäß Anspruch 6, **dadurch gekennzeichnet, dass** der Abstand jedes Lochs (25) vom Rand (12a) des Schutzfilms (12) größer als 2 mm ist.

8. Verglasungselement (10) gemäß Anspruch 6 oder 7, **dadurch gekennzeichnet, dass** der Abstand zwischen zwei nebeneinander liegenden Löchern (25) größer als 3 mm ist.

9. Verglasungselement (10) nach einem der vorangegangenen Ansprüche 6 bis 8, **dadurch gekennzeichnet, dass** jedes Loch (25) rechteckig ist.

10. Verglasungselement (10) gemäß Anspruch 1, **dadurch gekennzeichnet, dass** die Länge jedes rechteckigen Lochs (25) größer ist als 5 mm und die Breite jedes rechteckigen Lochs (25) größer ist als 3 mm.
